# EUROPEAN PATENT SPECIFICATION

(11) **EP 4 194 125 B1**
(45) Date of publication and mention of the grant of the patent: **25.09.2024**
(21) Application number: 21213893.7
(22) Date of filing: 10.12.2021
(51) Int. Cl.: B22F 10/47, B22F 10/28, B22F 10/80, B29C 64/153, B29C 64/386, B29C 64/40, B33Y 10/00, B33Y 50/00, B29C 64/30, B33Y 40/20

(54) **ADDITIVE MANUFACTURING OF A COMPONENT USING A CHAIN-LIKE SUPPORT STRUCTURE**
GENERATIVE FERTIGUNG EINER KOMPONENTE UNTER VERWENDUNG EINER KETTENARTIGEN STÜTZSTRUKTUR
FABRICATION ADDITIVE D'UN COMPOSANT À L'AIDE D'UNE STRUCTURE DE SUPPORT DE TYPE CHAÎNE

(43) Date of publication of application: 14.06.2023
(73) Proprietor: EOS GmbH Electro Optical Systems, 82152 Krailling (DE)
(72) Inventor: Cervantes Herrera, Alejandro, 82205 Munich (DE); Schmidt-Petersen, Julia, 81667 Munich (DE)
(74) Representative: Beckord & Niedlich Patentanwälte PartG mbB

(56) References cited:
- GB-A- 2 517 490
- US-A1- 2012 308 805

## Description

The invention relates to a computer-implemented method for generating control data for a device for additive manufacturing of a component by selectively solidifying an assembly material in an additive manufacturing process, wherein the control data are generated in such a way that they comprise instructions for the device for additive manufacturing. Further, the invention relates to a method for additive manufacturing of a component by selectively solidifying an assembly material in an additive manufacturing process. Furthermore, the invention relates to a control data generation device for generating such control data and to a control device for a device for additive manufacturing of a component and to a device for additive manufacturing of a component with such a control device and to a computer program product comprising a computer program to carry out the steps of the method for generating control data.

For producing prototypes and in the meantime also in the series production, additive manufacturing processes become more and more relevant. In general, "additive manufacturing processes", which are also termed "3D printing", are those manufacturing processes in which a manufacturing product or component is usually built on the basis of digital 3D design data by depositing material, i.e. the build-up material of the component. The buildup is usually, but not necessarily performed layer by layer.

For creating a predetermined form of a component, a build-up material is selectively solidified, whereby this solidification can typically be performed by irradiation with radiation energy, e.g. electromagnetic radiation, especially light and/or thermal radiation, but possibly also with particle radiation, e.g. electron radiation. Examples of methods that operate with irradiation are "selective laser sintering" or "selective laser melting". Here, thin layers of a usually powdery build-up material are applied one on top of the other repeatedly, wherein the build-up material in each layer is selectively solidified by spatially limited irradiation of the points that, after manufacture, are intended to belong to the manufacturing product to be produced. The powder grains of the build-up material can be partially or completely melted by the local introduction of energy by irradiation. After cooling, these selectively irradiated powder grains are then connected to one another in a solid body.

In many additive manufacturing processes one or more support structures are built up from the build-up material, e.g. simultaneously with the buildup of the desired component. Said support structures may comprise diverse subcomponents and can be produced for example between a part of the component and a construction platform of a device for additive manufacturing and/or between different areas of the same component. Typically, the support structures are provided to enable the buildup of complex objects and/or to improve the component quality, e.g. by heat transfer from the component to reduce mechanical tension within the component and/or to stabilize the component within the unsolidified build-up material.

In general, the support structures are at least partially in direct contact with the component, e.g. they can physically, i.e. mechanically, contact a surface of the component. The terms "physically" and "mechanically" are used as synonyms throughout the context of this application. However, after the buildup and the solidifying process has been finished, the support structures usually have to be removed from the component without damaging the component.

Conventional methods often depend on a mechanical separation of the support structures. Depending on the design and the number of the support structures, large mechanical forces can act on the support structures and on the component what comes with the risk of damaging the component. Especially in case of a complex and/or winding shape of the component, the support structures might not be accessible from the outside of the component at all or they might be inaccessible for removal tools. Therefore, conventional methods for removal of support structures from a component can be quite laborious, time consuming and error-prone.

US 2012/0308805 A1 discloses a support construction including a strip of a first supporting material where such strip intersects the layers in a volume designed to be an empty space in the object. The support construction can be removed from the volume upon application of a lifting force on the strip.

It is an object of the present invention to provide a method for generating control data for a device for additive manufacturing of a component, a method for additive manufacturing of a component, as well as a control data generation device for generating control data, a control device for a device for additive manufacturing, a device for additive manufacturing and a computer program product, by which at least some of the aforementioned disadvantages can be reduced or avoided.

That object is solved by a computer-implemented method for generating control data for a device for additive manufacturing of a component according to claim 1, by a method for additive manufacturing of a component according to claim 8, by a control data generation device for generating control data for a device for additive manufacturing of a component according to claim 9, by a control device for a device for additive manufacturing a component according to claim 10, by a device for additive manufacturing of a component according to claim 11 and by a computer program product according to claim 12.

In the method according to the invention control data for a device for additive manufacturing of a component by selectively solidifying, preferably by selective irradiation of an assembly material in an additive manufacturing process are generated. The control data are generated in such a way that they comprise instructions for the device for additive manufacturing. In particular, the control data can comprise control commands for additive manufacturing of at least one component with at least one component layer and/or for additive manufacturing of at least one support structure.

In particular, the control data and/or the control commands are generated such that they can be executed by the device for additive manufacturing to build up the component and/or the support structure according to the control data. In other words, the technical features described hereinafter of the support structure and/or of the component are preferably realized during an additive manufacturing process and/or after completion of an additive manufacturing process, wherein the additive manufacturing process is performed based on the control data.

The control data are generated in such a way that they comprise instructions for the device for additive manufacturing in such a manner that at least one component is built up with at least one support structure that is mechanically or physically connected to the component. The support structure and the component are preferably produced from the (same) build-up or assembly material. The support structure is fabricated such that at least one part of the support structure is in direct (physical or mechanical) contact with the component, especially with a surface of the component. The support structure can preferably be produced in the same manufacturing process in which the component is produced, i.e. essentially simultaneously, as described above. The support structure might extend between the component and a part of the device for additive manufacturing and/or between two areas of the same component and/or between two different components. This is described in detail later.

The control data are generated such that they comprise instructions for the device for additive manufacturing (in short "AM-device") in such a way that the support structure, especially the finished support structure that is manufactured according to the control data, comprises at least two, preferably a multitude, of support structure elements that are arranged side by side in a direction along a surface of the component. The surface can be an external surface and/or an inward facing surface of the component. Preferably the at least two support structure elements can be produced as two separate parts that interact with each other. In particular, the control data can be generated such that two adjacent support structure elements have a certain distance in the finished support structure. This is described in detail later.

The control data are generated such that at least one of the support structure elements, preferably each, mechanically or physically connects, preferably by fusion, at least a part of the surface of the component and the support structure, in particular a remaining part of the same support structure. For example, a first section of a respective support structure element could provide a direct mechanical or physical connection between the component and a second section of the same support structure element.

Preferably the at least one support structure element mechanically connects at least two different parts of the surface of the component. This is described later. The (respective) mechanical connection can be provided through assembly material selectively solidified during the manufacturing process. Preferably, a multitude of three or more support structure elements is provided according to the control data, whereby each support structure element is at least partially mechanically or physically connected to a surface of the component. In particular, a section of the component can be fused together with a section of a support structure element to provide a mechanical or physical connection. As described above, the terms "mechanical" or "physical" connection are used synonymously.

Apart from this it is also possible that at least one support structure element can be realized without a direct contact to the component. For example, a support structure element could be separated from a component by at least one single layer of unsolidified assembly material.

The control data are generated such that at least one of the support structure elements, preferably each, comprises at least one predetermined breaking point. Preferably, a respective breaking point can be realized as an, especially integral, part of a support structure element. Particularly preferred, the control data are generated such that they include control commands for additive manufacturing of at least one support structure element with at least one breaking point. In other words, the instructions for additive manufacturing of at least one breaking point being part of a support structure element can be included in the control data for additive manufacturing of at least one component and at least one support structure.

The respective breaking points can be realized in form of a breaking area each, in particular with a multitude of separate breaking elements. The breaking point and/or the breaking area can be manufactured from the assembly material of the additive manufacturing process. Preferably, the control data are generated in such a way that the breaking point of a respective support structure element is manufactured in such a way that, after solidification of the assembly material, the support structure element can be removed from the component by sliding it relative to the component, especially in a direction along a longitudinal extension of the support structure.

Preferably, the breaking points and/or the breaking areas can be realized as a part of a respective mechanical connection between the component and a support structure element. Particularly preferred, the control data can be generated such that a breaking point and/or a breaking area essentially provides a respective mechanical connection between the component and a support structure element.

Preferably, a respective support structure element can comprise a combination of a solid basic body and at least one, preferably two, areas that provide the breaking points.

Depending on the embodiment, a particular breaking point can be substantially completely destroyed and/or broken up as a result of a force acting on the support structure. However, it should be noted that a breaking point can be realized in such a way that only a part of the breaking point is severed and/or destroyed as a result of a force acting on the support structure. This means that at least some material of the (severed) breaking point might remain at the support structure element and/or at the component, especially after a removal of the support structure from the component.

The control data are generated such that the at least two support structure elements form together a chain-like structure. In other words, the support structure can be manufactured in the additive manufacturing process in such a way that the at least two support structure elements are interlinked. The chain-like structure is realized, especially after completion of the additive manufacturing process according to the control data, such that said chain-like structure can be removed from the component by applying a force at an access point and/or to an access point of the support structure. The individual support structure elements and/or the chain-like structure itself is designed in such a way that all members ("chain links") of the chain-like structure can be pulled and/or pushed away from the component in one common process.

At least one access point can be positioned at an outer end of the support structure and/or at another intermediate position along the chain-like support structure. The at least one access point can be realized, such that a preferably elongated chain-like structure can be removed from the component by pulling and/or pushing the chain-like structure at the access point of the chain-like structure itself. For removal, the force can in particular be applied in such a way that a component of the force acts in a direction that is essentially parallel to the surface of the component which is in contact with and/or faces towards the chain-line support structure. This can be realized by pulling and/or pushing the chain-like structure in a direction essentially parallel to a longitudinal extension of the chain-like structure.

Especially with reference to components with curved surfaces, the force can preferably be applied such that a component of the force is essentially parallel to the tangent of the curved surface. In particular, the force can be applied in such a way that a component of the force acts in a direction that is substantially parallel to a particular portion of the surface of the component, which portion is in physical contact with and/or is adjacent to the support structure element having the access point. It is possible, that the removal of the chain-like support structure is realized by pushing and/or pulling the chain-like structure in a direction essentially perpendicular to a longitudinal extension of at least one of the support structure elements.

Advantageously, all chain links of a single support structure can be removed from a component by applying a force to only one of the support structure elements. The force can be a tensile force (pulling force) and/or a compression force. By way of example and without limitation, the invention is described by means of a tensile force, as this may have some further advantages. The force can preferably be applied to the support structure manually and/or by a suitable device. For example, the force could be applied by a removal device in an automated process essentially without manual intervention.

Due to the special design of the support structure and/or the interaction of the individual subcomponents, the force that is applied to a specific (first) chain link is transmitted to at least an adjacent (second) chain link once the first chain link is removed from its original position with respect to the component and/or from at least another adjacent chain link. The wording "removed from its original position" has to be understood such that a respective support structure element is at least moved a certain distance away from the component and/or from an adjacent support structure element. In particular, a "removal" of a support structure element can be realized in such a way that a respective mechanical connection is at least loosened and/or such that a respective support structure element is completely detached from the component. In this manner, the tensile force is (progressively) transmitted from one chain link to at least the next one.

This can have the beneficial effect that just enough force must be applied to loosen or remove one single chain link at a time. Thereby it can be worked with significantly lower forces compared to conventional methods in which all subcomponents of a support structure are removed in a common process. Still beneficial, the pulling and/or pushing force is automatically transferred from one chain link to the adjacent chain link, which means that even support structure components that are difficult to access can be removed. Thereby at least some of the previous disadvantages can be reduced or avoided.

In the method for additive manufacturing of at least one component by selectively solidifying, preferably by selective radiation of an assembly material in an additive manufacturing process the component is built up with at least one support structure that is mechanically or physically connected to the component. The support structure is manufactured such that it comprises at least two support structure elements arranged side by side in a direction along a surface of the component. The support structure is realized such that at least one of the support structure elements, preferably each, mechanically or physically connects the surface of the component and the support structure. Preferably, the mechanical connection is provided through assembly material, which is selectively solidified during the manufacturing process.

The method for additive manufacturing is realized such that at least one of the support structure elements comprises at least one predetermined breaking point. Preferably, at least the support structure element with a mechanical connection to the component comprises a predetermined breaking point. Preferably, the breaking point can be manufactured from the assembly material. The at least two support structure elements are produced such that the two components form together a chain-like structure. The chain like structure is realized such that the support structure can be removed from the component by applying a force at and/or to an access point of the support structure itself.

Particularly preferred, the method is controlled by a control data set that is generated using the method for generating control data according to the invention. The set of control data might contain control data for a specific construction job, e.g. for manufacturing at least one component with at least one support structure.

According to the invention, a control data generation device for generating control data for a device for additive manufacturing of a component by selectively solidifying, preferably by selective irradiation of an assembly material in an additive manufacturing process is designed such that the generated control data comprise instructions for the device for additive manufacturing such that at least one component is built up with at least one support structure that is mechanically or physically connected to the component. The control data are generated such that the support structure comprises at least two support structure elements that are arranged side by side in a direction along a surface of the component, whereby at least one of the support structure elements mechanically or physically connects the surface of the component and the support structure (provided that the additive manufacturing process is performed on the basis of the control data). Preferably, the mechanical connection is provided through assembly material, which is selectively solidified during the manufacturing process. The control data are generated such that at least one of the support structure elements comprises at least one predetermined breaking point, whereby the at least two support structure elements form together a chain-like structure. The chain like structure is realized such that it can be removed from the component by applying a force at and/or to an access point of the support structure.

The control data are preferably generated in such a way that if the device for additive manufacturing is controlled in the irradiation mode based on the control data, the assembly material is irradiated with an energy beam essentially with a determined intensity profile. That is to say, the control data generating device is designed in such a way that control data are created with which the additive manufacturing device can be appropriately controlled using this control data. In particular, the control data generating device is suitable to provide control data according to the invention and/or to execute the method for generating control data according to the invention.

According to the invention a control device for a device for additive manufacturing of a component by selectively solidifying, preferably by selective radiation of an assembly material in an additive manufacturing process is designed to control the additive manufacturing device in such a way that at least one component is built up with at least one support structure that is mechanically or physically connected to the component. The support structure is realized such that is comprises at least two support structure elements that are arranged side by side in a direction along a surface of the component, whereby at least one of the support structure elements mechanically or physically connects the surface of the component and the support structure. The mechanical connection is preferably provided through assembly material selectively solidified during the manufacturing process. The device for additive manufacturing is controlled such that at least one of the support structure elements, preferably each, comprises at least one predetermined breaking point. The at least two support structure elements are manufactured such that they form together a chain-like structure, which can be removed from the component by applying a force at and/or to an access point of the support structure. In particular, the control device is suitable to control the device for additive manufacturing based on control data that are generated according to the invention. In addition, the control device is preferably suitable to control the individual elements of a device for additive manufacturing, as it is known from conventional control devices for AM-devices of this kind.

The control device and/or the control data generation device can preferably be provided wholly or partially in the form of software. By way of example, one or both elements can be provided in the form of suitable software program parts. Preferably, the control device and the control data generation device are realized in form of separate software program parts. Particularly preferred, the respective software program parts are realized to interact for the additive manufacturing process.

The control device and/or the control data generation device can each be provided in form of software program parts on a computer unit and/or can be implemented in a computer unit or a CPU. The respective software program parts can be provided on separate computer units. In particular, the software program part of the control data generation device can be realized independent from the control device or the additive manufacturing device itself. By way of example, it is possible to provide the control data generation device on an external computer, which for example is coupled suitably to the control device for data exchange, such that the control device can access this control data generation device as an external part. A computer unit can, for example, have one or more cooperating microprocessors or the like.

However, it is preferred - without limitation of the invention - that the control data generation device and the control device for the additive manufacturing device are realized as software program parts on the same computer unit. Preferably, the control data generation device can be realized as part of the computer unit that provides the control device of the additive manufacturing device. In general, the control data generation device could also be realized as part of the control device. The control device can be a part of the device for additive manufacturing or can be independent thereof, while there is data exchange between the additive manufacturing device and the control device.

A largely software-based implementation has the advantage that previously used computer units, in particular control devices of production devices for additive manufacturing, can be retrofitted in a simple manner by means of a software or firmware update in order to operate in the manner according to the invention. In this respect, the object is also achieved by a corresponding computer program product with a computer program, which can be loaded directly into a memory device of a control data generation device and/or a control device of a device for additive manufacturing of a component, whereby the computer program comprises program sections to carry out all steps of the method for generating control data and/or all steps of the method for additive manufacturing of a component when the program is executed in the control data generation device and/or the control device.

In addition to the computer program, such a computer program product may contain additional components such as, for example, documentation and/or additional components, including hardware components, such as, for example, hardware keys (dongles etc.) for using the software. A computer-readable medium, for example a memory stick, hard disk or other transportable or permanently installed data carrier, can be used for transport to the computer unit and/or for storage on or in the computer unit (e.g. in the control device and/or in the control data generation device), on which the program sections of the computer program that can be read and executed from a computer unit, particularly a control device, are stored.

The device for additive manufacturing of at least one component in an additive manufacturing process, which device is also termed an additive manufacturing apparatus, comprises at least one feed device for introducing a layer of an assembly material into a process space, a solidification unit for selectively solidifying at least a portion of the assembly material of the layer, especially a device for selective irradiation by means of an energy beam, and a control device according to the invention.

The build-up material is preferably applied in layers onto a building field of the AM-device. The build-up material can comprise a metal powder. However, the invention is not limited to this, but can also be used with other, preferably powdery, build-up materials, such as plastics and/or ceramics. In each case, between the application of two subsequent layers of build-up material, a selective solidification of build-up material can take place. In addition, the AM-device should comprise all further components that are present in conventional apparatus of this kind.

It should be pointed out that the AM-device can also have several solidification units, especially several irradiation devices, which are then controlled in a correspondingly coordinated manner, especially on the basis of the control data. In this respect, each irradiation device can comprise two or more energy beams, which can overlap to some extent. For example, several energy beams can be used coordinated, specifically in parallel to different points of a component cross-section (e.g. to increase the velocity of assembly) or combined at one point. An energy beam can be both particle radiation and electromagnetic radiation, such as light or preferably laser radiation.

In addition, the AM-device can comprise a control data generating device according to the invention and/or an interface for such a control data generating device for providing the corresponding control data and/or an interface for receiving control data from the control data generating device. The latter feature might be suitable to provide control data to the control device, which data were created by a control data generation device on an external computer unit.

The AM-device according to the invention as well as the control device for the AM-device and the control data generation device and the method for additive manufacturing according to the invention share the advantages of the inventive method for generating control data as described previously.

Further particularly advantageous embodiments and developments of the invention will become clear from the dependent claims and the following description, wherein the independent claims of each claim category can also be developed analogously to the dependent claims and exemplary embodiments of another claim category, and in particular individual features of various exemplary embodiments or variants can also be combined to form new exemplary embodiments or variants.

The control data can be generated in advance to the additive manufacturing process ("AM-process") and can be transmitted as a complete package or a type of "control protocol" to the AM-device, which then carries out the manufacturing process. In principle, however, it would also be possible to determine control data for subsequent process steps, while the AM-process is already running. For example, while a (first) layer is being irradiated or solidified, the control data for the following (second) layer can be determined and can be used for the additive manufacturing process when the first layer is solidified.

The starting point for the generation of control data can be, among others, data that indicate at which points within a process zone or a construction field of the AM-device the assembly material is to be solidified in each layer, i.e. which parts should later belong to the component or to any support structures or the like and which areas should be excluded from solidification. These data can be taken from a digital 3D model of the object to be manufactured and/or from a digital 3D model of the support structures to be manufactured. If such data and preferably other process parameters are available, the control data can be determined based on these input data. By way of example, said process parameters might be any of the following parameters: the type of an assembly material, the type of the irradiation device, in particular the type of an energy beam, the (expected) local target temperature distribution in the construction field and/or the framework within which these parameters and other parameters can be set.

The control data can preferably comprise exposure control data, such as scan data, that define or specify the movement of the energy beam on the surface. The control data can also comprise control data for setting the level of energy or laser intensity or control data for setting the "shape" of the beam or the beam profile and/or the focus or the extent of the beam perpendicular to the beam direction. Furthermore, control data can include other control information, such as coating control data that specify how thick a current layer is, or information for controlling pre- or post-heating with other energy input means, or information for injecting a process gas into the process chamber. In other words, the control data can be generated in such a way that they comprise all required control commands to control an AM-device, whereby the AM-device performs additive manufacturing of at least one component with at least one support structure on the basis of the control data, whereby the control of the AM-device is preferably performed by the control device.

It should be mentioned at this point that the control data can be used on the one hand for a "simple" control of an AM-process. On the other hand, the control data can be generated in such a way that they are suitable for regulating the AM-process. By way of example, the control data can specify "target data" for regulation of an, also ongoing, AM-process. This means that with the aid of the method for generating control data, a number of target values for specific parameters of the AM-process can be set, whereby the control device can receive input data that represent these parameters, e.g. actual process data that are determined for example by melt pool monitoring or time-resolved optical tomography. Then the control device could control the AM-device in such way that the target values that are defined in the control data are reached in the AM-process at least approximately.

The method for generating control data is preferably performed such that at least one support structure element, preferably each, is made integral with a component to realize a mechanical connection between said support structure element and the component. Preferably, the connection between a support structure element and the component is made by means of a material bond. This means that the support structure itself can form the (direct) connection to the component.

By way of example, a respective support structure element may be directly and/or firmly attached to the component, wherein the two parts can form one continuous structure. The wording "directly attached" especially means that there is no gap between the component and the support structure element and/or that there is no unsolidified build-up material between the component and the support structure element.

Preferably, a physical or mechanical contact can be realized such that at least a part of the support structure is structurally attached to the surface of the component. Preferentially, this attachment is realized by selectively solidifying a specific portion of the assembly material interlaying between the component and the support structure, such that, after selective solidification, said portion of selectively solidified assembly material mechanically or physically connects the component and at least a part of the (remaining) support structure. By way of example, the mechanical connection can be realized by means of a boundary layer of the support structure element.

Preferably, the control can include information for selective, especially complete, melting a particular subsection of the build-up material of a layer, whereby after solidification of the build-up material a mechanical connection between a support structure element and a component is formed by said subsection. In particular, the build-up material that forms a mechanical connection can be completely sintered according to the control data. Preferably, the mechanical contact can be characterized such that the particles of the build-up material are firmly attached, i.e. there is a significant inter-particle attachment in the area of the mechanical contact. This can differentiate a "mechanical connection" according to the invention from other AM-processes in which solid elements are manufactured in cavities within a component, whereby said solid elements are surrounded by semi-sintered or un-sintered build-up material, e.g. material in powder form.

Preferably, the selectively solidified portion or the mechanical connection itself has mechanical and thermic properties, such that the fabrication of objects, possibly complex objects, is made possible or can be improved. Likewise, the complete support structure can be characterized by at least one thermal and/or mechanical property or function. Preferably, the respective support structure elements, especially the support structure itself, can be manufactured and/or designed in such a way that during and/or after the completion of additive manufacturing a specific mechanical stabilization function and/or a specific heat dissipation function is achieved by the support structure. Preferably, the support structure can be designed to support a heat transfer from the component to the support structure and/or to reduce a mechanical tension within the component and/or to realize a mechanical stabilization of the component, especially through the mechanical connection. This can differentiate a support structure according to the invention from other AM-processes in which solid elements within cavities of a component are designed such that the cavity is filled as completely as possible by the solid element to facilitate the removal of material from the cavity after completion of the AM-process.

Depending on the embodiment, a support structure, especially a respective support structure element, can have a dimension and/or a geometry and/or a density and/or a volume that is substantially smaller compared to the component with which the support structure is associated.

Preferably, a support structure can be configured such that a volume of the support structure is significantly smaller than a volume of a cavity of a component in which the support structure is realized. By way of example, the support structure can be designed such that less than 50 %, preferably less than 40 %, more preferably less than 30 %, in particular less than 25 %, of a volume of a cavity in the component is filled by the support structure.

The method for generating control data is preferably performed in such a way that at least one of the support structure elements comprises more than one single breaking point. The two or more separate breaking points can be positioned in different areas of the support structure element. In a preferred embodiment, each of the support structure elements comprises more than a single breaking point, in particular two separate breaking points. Particularly preferred, the two breaking points are located in opposite areas of a support structure element. In the following, the invention will be described - without limitation - by means of support structure elements with two individual breaking points, whereby each breaking point is part of a mechanical connection between the (remaining) support structure element and an object.

Preferably, the control data can be generated such that a respective breaking point can be realized by selective melting of a subsection of the build-up material, whereby after solidification of the build-up material in that subsection the breaking point is formed. This means that a breaking point can be "actively" manufactured. To form a respective predetermined breaking point, the build-up material can be selectively solidified in several successive layers.

Preferably, the breaking points can have a different, particularly preferred a lower, density than the component. Particularly preferred, the respective breaking points can have at least partly a porous structure, whereby the structure of the breaking points can be more porous than the structure of the component and/or the structure of the solid basic body of the support structure element. In principle, it might also be possible to change other parameters of a support structure element to realize a breaking point, such as grain size, crystallinity degree, crystal structure, etc. to obtain a different, preferably lower, density. Alternative or in addition, a defined breaking point can be provided by a special geometry, e.g. at least part of the breaking point can be designed filigree compared to the solid basic body. By way of example, the breaking points of a support structure element can be designed to have a smaller cross-section than the cross-section of the remaining support structure element, e.g. the solid basic body, which is not designated to serve as a breaking point.

Depending on the requirements with respect to mechanical stability and/or thermal properties of the support structure, particularly in relation with heat dissipation, the dimensions and/or the volume and/or the weight and/or the density and/or the geometry of a respective solid basic body can be different from an associated breaking point.

For example, a support structure element can have at least one breaking area forming a breaking point, which breaking area has a dimension in the direction pointing to the surface of a component to which it is mechanically connected, which dimension can be substantially larger than the dimension (in the same direction) of the solid basic body of the same support structure element.

Particularly preferred, a respective breaking point can be situated at a transition between the support structure element, preferably the basic body, and the surface of the component. However, in principle, a breaking point can also be spaced from a surface of the component. It is also possible that the respective breaking points of the same support structure element have a different design. Alternatively or additionally, the respective predetermined breaking points of two, e.g. adjacent, support structure elements of the same support structure can have a different design. It is preferred that a respective breaking point of a support structure element comprises two or more, also separate, breaking elements. By way of example, the breaking elements can comprise filigree structures. In principle, the individual breaking elements of one and the same breaking point can have a different design.

Further, at least one support structure element can be built differently from at least one further support structure element of the same support structure. For example, two adjacent support structure elements can have a different design. By way of example, two support structure elements, also neighbouring, can have a different ratio regarding the dimension of the (respective) basic body and the (respective) area providing the breaking point. It would also be possible for two or more support structure elements to have a substantially identical basic body, with the respective predetermined breaking points having different configurations.

Alternatively or in addition, the specific design of (neighbour) support structure elements can be related to the position of the support structure elements themselves with regard to the component or within the component and/or with respect to each other. For example, support structure elements that are characterized by a comparatively large angle with regard to the surface of the component can comprise relatively small basic bodies. A smaller basic body can have the advantage that a smaller force for removing the support structure is required, which simplifies the process for removal.

In a preferred embodiment, at least two adjacent support structure elements are chained to one another via a form-fitting connection in the additive manufacturing process. Preferably, the control data are generated in such a way that at least one support structure with a multitude, i.e. three or more, of support structure elements is produced in the additive manufacturing process. The individual support structure elements might be realized as separate elements that adjoin to each other. For example, the support structure elements could form a row along the surface of the component. Particularly preferred, a multitude of support structure elements is realized such that two adjacent support structure elements are coupled via a positive-locking connection in each case.

The respective form-fitting connection can be designed in such a way that when a first of the support structure elements is moved away from a second of the support structure elements a force is transmitted from the first support structure element to the second support structure element. Preferably, a tensile or compression force that is acting on a first support structure element can be transferred essentially completely to a second (adjacent) support structure element using the form-fitting connection.

The force that is transmitted to a first support structure element works on the at least one breaking point, preferably on two opposite breaking points, that are realized between the first support structure element and the component and/or between the support structure element and a part of the AM-device, e.g. a building platform. Due to the force acting on the first support structure element, the respective breaking points of the first chain link become at least loosened, preferably completely broken. The tensile force is transferred to an adjacent (second) support structure element by use of the form-fitting connection, whereby the force then works on the respective breaking points of the neighbouring second chain link. In principle, the force might be transferred, at least in parts, before a (first) support structure element is detached from the component, for example if the breaking points are stretched to some extent due to the force, whereby the breaking points are loosened.

In this manner, the force, which is acting on the support structure, is transferred progressively, e.g. step-by-step, from one support structure element to the next one. In this manner, the complete support structure can be removed from the object. In this way the entire support structure can be completely, in particular physically, separated from the component.

Advantageously the (tensile) force has to be applied to the support structure only at one single (access) point, whereby due to the design of the chain links and the form-fitting connection the complete support structure, e.g. a complex support structure with a multitude of single elements, can be removed in one common process without further interventions. For example, the complete support structure can be pulled away from the component like a chain.

Preferably, the control data can be generated such that at least one chain link forming a support structure element of a chain-like structure has a different design and/or geometry than at least one further chain-link of the same chain-like structure. The design of a specific chain link can be generated depending on the position of said chain link relative to the component and/or relative to the position of other chain links within the same chain-like structure.

As described above, the respective chain links, which preferably represent the support structure elements of a chain-like support structure, can each comprise a solid basic body and at least one area providing a breaking point. In analogy with the previous description, the dimensions and/or the volume and/or the weight and/or the density and/or the geometry of a respective basic body can be different from the associated area that provides the breaking point of the respective chain link.

By way of example, the last chain link of a chain-like support structure, e.g. the chain link with the largest distance to an access point, can consist of a basic body being designed so that at least one direction of extension of the chain link is larger than an area providing the breaking point and/or larger than the solid basic bodies of other chain links.

Advantageously, such kind of chain-like support structure can facilitate the removal of unsolidified powder and fragments of the support structure and at the same time the removal of the support structure itself. Alternative or additional, a chain link that structurally carries more weight compared to others chain links can consist of a denser and/or more extended solid basic body than other, e.g. neighbouring, chain links.

Preferably, the control data are generated in such way that the respective support structure elements are realized so that the tensile or compression force is transmitted from a first support structure element to (at least) an adjacent second support structure element, when the first support structure element is moved away from a predetermined minimum distance, which preferentially amounts to at least 0.02 cm. Preferably, the minimum distance is at least 0.05 cm. Further preferably, the predetermined minimum distance is at least 0.1 cm. The minimum distance can be at least 0.2 cm or more. Preferably, the minimum distance can refer to the distance between two adjacent solid basic bodies of two support structure elements along the surface of the component.

This means that the force is transmitted from a first to a second chain link (or equivalently to a number of successive chain links), as soon as the first chain link is moved by (at least) a, preferentially predetermined, minimum distance from its original position by use of the force acting on it. In other words, the force is transmitted from the first to the second chain link once the first and the second chain link are at a distance equal to or larger than the, preferentially predetermined, minimum distance, said distance between the first and the second chain link being preferably reached through a relative movement between the two adjacent support structure elements. It should be mentioned that the force might be transmitted, whereby the first chain link is still in physical contact with the component, e.g. when the first chain link is stretched to such an extent that the predetermined minimum distance between the adjacent chain links is reached. In general, the force might be transferred to a third chain link, whereby the second and the first chain link are, at least partly, still in physical contact with the component. However, the first and the second chain link are removed from their original position (by stretching) due to the force acting on the respective chain links.

The minimum distance can be predetermined by the shape and dimensions of the coupling structures between neighboured support structure elements and/or the elasticity of the material forming the breaking points between the support structure elements and the component and/or the elasticity of the material forming the support structure elements. In particular, the elasticity of the material forming the breaking points and/or the support structure elements can depend on its chemical composition and/or its crystal structure. Further, the elasticity of the material forming the breaking points can depend on other properties related to the fabrication of the breaking points. For example, the minimum distance required for the applied force to be transferred from a chain link to another one and/or for detaching the support structure from the component, can be related to the porosity and/or the density of the material forming the breaking points and/or the support structure elements.

It is possible to predetermine different minimum distances between different pairs of neighbouring support structure elements. In this manner, the applied force can be transferred to a different extent to successive support structure elements. For example, a comparatively large minimum distance can be predetermined between a first and a second neighbouring support structure element, while a comparatively short minimum distance in relation to the first mentioned minimum distance can be predetermined between a second and a third neighbouring support structure. Based on this possible conformation, the applied force will be transferred more quickly and/or to a larger extent from the second to the third neighbouring support structure element than from the first to the second neighbouring support structure element, facilitating the removal of the support structure from the component.

Further, it is possible to form in correspondence of different support structure elements breaking points having different resistance against the applied force, i.e. breaking points having a different elasticity. For example, breaking points with comparatively small elasticity (large plasticity) can be formed in correspondence of a component surface having a large curvature radius. This facilitates the deformation of such support structure elements and the transfer of the applied force from such a support structure element to the successive neighbouring support structure elements and, therefore, the removal of the support structure. Alternatively or in addition, also the support structure elements, e.g. the solid basic bodies, can be formed such that they have different elasticity, facilitating the removal of the support structure, for example, especially in surface areas of the component with high curvature radius. The removal can be facilitated by the deformation of the support structure elements under the application of a force, especially due to the specific elasticity, preferably a large plasticity, of the support structure elements.

Preferably, the control data are generated such that a first support structure element of the at least two support structure elements that are coupled to one another comprises a recess and a second support structure element comprises an associated projection, which positively engages in the recess to form a form-fitting connection. Preferably, the projection is designed to undercut into an assigned recess. In particular, the recess and the associated projection are designed to be movable against each other.

For the sake of completeness, it is noted that also the first support structure element can have a projection, in which case the associated second support structure element can have a recess. The terms "first" and "second" support structure element are used primarily to differentiate the individual elements.

Particularly preferred, the support structure comprises a multitude of support structure elements, whereby at least some of the support structure elements are realized in such way that each support structure element comprises a recess and a projection, which positively engages with a recess of an adjacent support structure element. In particular, the recess and the projection from the same support structure element are realized in opposite areas of said support structure element.

In this embodiment, the form-fitting connection between two neighboured support structure elements is realized by two interacting coupling parts, i.e. a recess and a projection, whereby the respective parts have a different design. In particular, the coupling parts of two adjacent support structure elements are essentially designed to complement each other.

However, the control data can also be generated in such way that the at least two adjacent support structure elements each comprise at least one recess facing to each other, provided that the support structure is additively manufactured based on the control data. The two adjacent support structure elements are coupled to each other by an intermediate member, which engages positively in the recesses facing each other of the adjacent support structure elements. Preferably, the intermediate member is designed to undercut into the assigned recesses of two adjacent chain links. The respective intermediate member is preferably realized in form of a separate part. In particular, the intermediate member can be built separately from the associated support structure elements. The intermediate member can be manufactured from the assembly material by selective solidification. Further preferred, the intermediate member and/or the associated support structure elements are designed to be movable against each other.

Preferably, the support structure comprises a multitude of support structure elements, wherein two adjacent support structure elements are coupled by means of an associated intermediate member in each case. Particularly preferred, at least some of the support structure elements have two separate recesses, which are realized in opposite areas of the support structure elements. In this embodiment, the form-fitting connection between two neighboured support structure elements is realized using two interacting coupling parts of the support structure elements having the same design, i.e. the recesses. Therefore, an additional intermediate element is required in each case as a bridging element between the recesses of two different support structure elements. Preferably, the intermediate member is a coupling part as well and/or a part of the support structure. Thus, in this embodiment, the form-fitting connection between two neighboured support structure elements is realized by three interacting coupling parts, i.e. a first and a second recess and an intermediate member.

The control data are preferably generated in such way that the projection of a first support structure element is designed such that its cross-section along the direction ("connection direction") connecting the first support structure element and a second associated support structure element at least partially increases, preferably continuously or discontinuously, towards a centre of the second support structure element. This means that the cross-section can exclusively increase in specific parts or in a specific (first) region of a respective projection in the connection direction. The "centre" of the respective second support structure element can for example be essentially the centre of gravity of said element.

Preferably, the (same) projection can be realized such that the cross-section decreases in specific parts or in a specific (second) region of the projection in the connection direction, whereby the first and the second region are different. By way of example, the cross-section can decrease in one section of the projection towards the centre of the second support structure element along the connection direction.

Alternatively or in addition, the control data can be generated in such way that a respective intermediate member is designed in the additive manufacturing process such that its cross-section along the direction connecting the intermediate member and at least one of the first support structure element and the second support structure element at least partially increases, preferably continuously or discontinuously, towards the centre of the first and/or the second support structure element.

In each case, the respective recess can be designed such that it receives the associated projection or at least a part of the intermediate member in a form-fitting manner. By way of example, the respective projection and/or the respective intermediate member can at least in parts, particularly the end parts of the intermediate member, be realized essentially mushroom-like, cone-like, T-like or dovetailed. The shape of the recess may be complementary such that a positive locking is achieved between the coupling elements or coupling parts of neighboured support structure elements.

For the sake of completeness, it should be noted that the support structure can have a multitude of support structure elements, whereby the support structure can comprise a combination of differently designed support structure elements. For example, the support structure elements can have a different geometry. In particular, some of the support structure elements can be realized such that a form-fitting connection between two neighboured support structure elements is realized by a projection and an associated recess, whereby other support structure elements of the same support structure might be realized such that a form-fitting connection between two neighboured support structure elements is provided by an intermediate member. In addition, the control data can be generated in such a way that two or more of such support structures, which can be designed essentially identical or different, can be manufactured in the same AM-process.

Regardless of the specific embodiment it is preferred, that the coupling parts of a respective form-fitting connection are realized so that the coupling parts are essentially completely complementary to each other. Advantageously, the support structure can be removed from the component exclusively by applying a (pure) tensile force or a (pure) compressive force. Thus, the application of other forces, e.g. torsional forces, can be avoided. Preferably, a force can be transmitted from a first to a second support structure element, especially to remove the support structure from the component, by means of a portion of a coupling part that is disposed within an associated second coupling part, wherein an effective contact is realized between both coupling parts.

Regardless of the specific embodiment it is preferred, that the coupling parts of a respective form-fitting connection are realized with a certain clearance or play, in particular in an initial state of the involved support structure elements (without force). Preferably, two adjacent support structure elements can be arranged in such a way that a projection of a first chain link can be moved a certain distance with respect to the associated recess and/or within the associated recess of a second chain link. Likewise, a respective intermediate member can be manufactured so that the intermediate member has a certain clearance with respect to the respective recesses of the associated support structure elements.

In particular, a respective form-fitting connection can be realized so that the coupling parts have to be moved relative to each other over a certain distance, i.e. the clearance, in order to transfer the force between the associated support structure elements. The clearance of a respective form-fitting connection can be at least 0.02 cm, preferably at least 0.05 cm, further preferred at least 0.1 cm, particularly at least 0.2 cm or more.

Advantageously the interacting coupling parts can be moved against each other, whereby also the adjacent support structure elements can be designed movable in relation to other support structure elements. This can have the advantage that the whole support structure is more flexible, whereby also a complex support structure, e.g. a curved or a wavelike support structure, can be removed from the component in a simple way. However, it is also possible that the position of the support structure elements to each other is fixed. Preferably, also in the latter embodiment the coupling parts of a respective form-fitting connection are realized with a certain clearance.

Preferably, the control data can be generated in such a way that the support structure fills in at least one specific structure in the component, whereby the structure is a blind hole or a straight and/or curved continuous tubular recess. Depending on the component, the at least one support structure can fill at least partly two or more, even different, structures of the component.

A particular advantage can result from the support structure in case of components with a complex geometry. For example in case of a blind hole, the major part of the support structures might not directly be accessible from the outside, particularly if the aspect ratio is very high. For such a high aspect ratio the working surface is very small compared to the contact surface between the support structure and the component, which makes it difficult - at least with respect to conventional support structures - to exert enough force to the support structure to remove the support structure from the blind hole without destroying the support structure before the removal and/or without damaging the component. This problem can be overcome by the support structure having a chain-like structure.

In case of a curved tubular recess the use of the support structure with a chain-like structure, especially due to the sequence of predetermined breaking points, might enable to overcome the natural mechanical resistance, which origins from the curved form.

The invention will be explained once again in greater detail hereinafter with reference to the accompanying figures provided with reference to exemplary embodiments. Here, like components are provided with identical reference signs in the various figures, in which:
Figure 1 shows a schematic, sectional view of an exemplary embodiment of a manufacturing arrangement with a component and a support structure according to the invention,
Figure 2 shows a schematic, sectional view of an exemplary embodiment of a manufacturing arrangement with a component and a support structure according to the invention in a state where the support structure is partly removed from the component,
Figure 3 shows a schematic, sectional view of an exemplary embodiment of a manufacturing arrangement with a component and a support structure according to the invention,
Figures 4 and 5 show schematic, sectional views of exemplary embodiments of manufacturing arrangements with different support structures according to the invention,
Figures 6 to 8 show schematic, sectional views of different exemplary embodiments of support structure elements according to the invention in greater detail,
Figure 9 shows a schematic, partly sectional view of an exemplary embodiment of a device for the additive manufacture of manufacturing products.

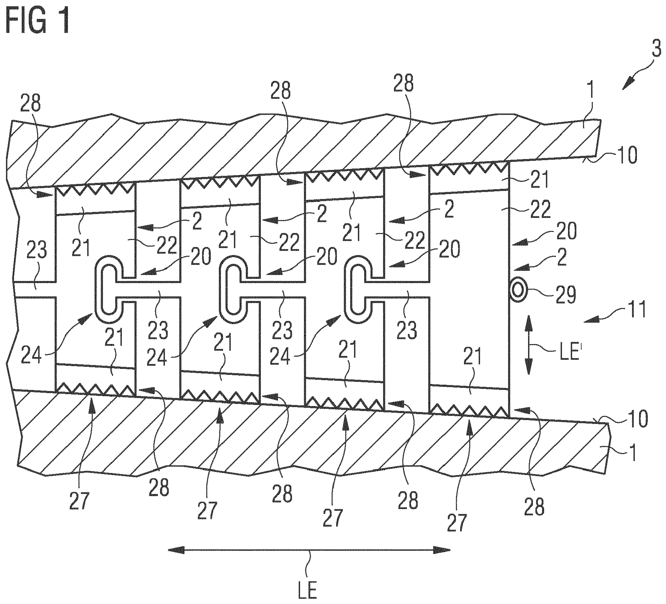

Figure 1 shows a sectional view of a subarea of a manufacturing arrangement 3 comprising a component 1 and a support structure 2 according to an embodiment of the invention. The support structure 2 is located here between two parts of the same component 1. For example, the support structure 2 could fill in blind hole 11 of the component 1 that is accessible from an outer surface (not shown here) of the component 1. The condition shown in figure 1 could be a situation after completion of an additive manufacturing process and before a removal of the support structure 2 from the object 1.

The support structure 2 comprises a multitude of support structure elements 20, which are interlinked to form a chain-like structure 27. In the example shown here, the support structure 2 and the chain-like structure 27 respectively form an elongated structure 27. The individual support structure elements 20, which are also termed chain-links 20, are realized in such a way that the support structure 2 runs in a direction along a surface 10 of the component 1. The chain links 20 are arranged side by side such that the support structure 2 has a longitudinal extension LE. By way of example, the longitudinal extension LE of the support structure 2 can be essentially parallel to a longitudinal extension of the surface 10 of the component 1 or essentially parallel to a longitudinal extension of the blind hole 11.

The longitudinal extension LE of the support structure 2 is here essentially perpendicular to a longitudinal extension LE' of the support structure elements 20.

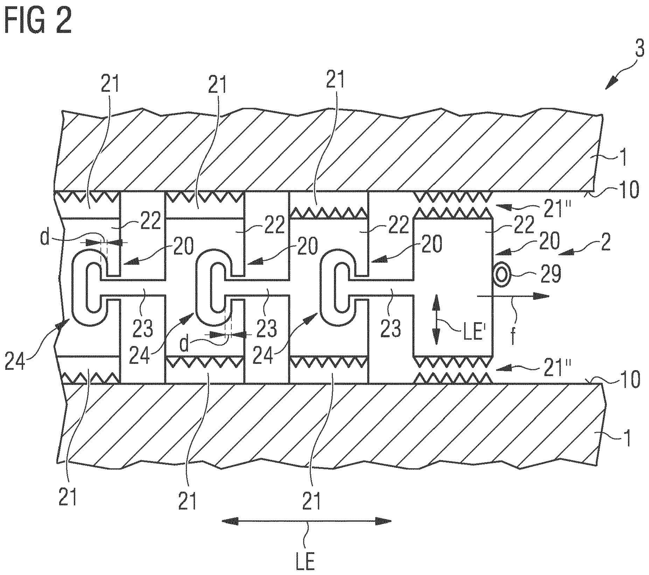

Each of the support structure elements 20 comprises a solid basic body 22 and two separate predefined breaking points 21. The breaking points 21 are realized in opposite areas of the solid basic body 22. In this exemplary embodiment, all breaking points 21 are designed so that a mechanical connection, i.e. a physical connection, between the respective chain link 20, in particular the solid basic body 22, and the surface 10 of the component 1 is provided. Thereby each chain-link 20 mechanically connects the surface 10 of the component 1 and the support structure 2. In figure 1, as is preferred, the support structure elements 20 are connected to different (here opposite) sections of the surface 10 of the component 1. In this context a "connection" means that the respective support structure element 20 does not only contact the component 1, but it is fused with the component 1. It becomes clear from figure 1 that the individual breaking points 21 have in part a filigree structure 28 at a transition to the object 1, here in the form of serrations or teeth. For removal of the support structure 2, at least these filigree structures 28 can be destroyed due to a relative movement between the support structure 2 and the object 1. This is explained with regard to figure 2.

The support structure elements 20, which are shown in the left part of figure 1, each comprise a projection 23 and a recess 24 that are located on opposite sides with respect to the longitudinal extension LE or longitudinal direction LE of support structure 2. The support structure element 20 on the far right comprises a projection 23 on one side and an access point 29 on the opposite side. The access point 29 is suitable to transfer a force to the assigned chain link 20.

The projection 23 of a first chain link 20, e.g. the chain link 20 on the right, positively engages in an associated recess 24 of a second neighbouring chain link 20, e.g. the second one from the right, whereby the two chain links 20 are coupled to one another. In this way, the remaining chain links 20 of the support structure 2 can be coupled to each other. It becomes clear that each chain link 20 (except the elements on the very outside) can comprise a projection 23 and a recess 24, whereby each chain link 20 can be coupled with two neighbouring chain links 20. Unlike shown here, the first chain link 20 (far right) could have a recess 24, whereby the second chain link 20 (left of it) would comprise an associated projection 23, which positively engages in the recess 24 and so on.

Figure 2 shows a sectional view of a subarea of a manufacturing arrangement 3 with a support structure 2 according to an embodiment of the invention in a state, wherein the support structure 2 is currently moved away from its original position. In this example, a tensile force f is applied to the right support structure element 20, e.g. by pulling the access point 29 in the direction of the arrow. The force f is here applied essentially parallel to the longitudinal extension LE of the support structure 2.

By means of the tensile force f the first (far right) chain link 20 is moved in the longitudinal direction LE, whereby the predetermined breaking points 21" of the first support structure element 20, which contact the component 1 on the inner upper and bottom surface 10 of the component 1, are broken. Thereby the first chain link 20 is detached from the component 1. This is schematically shown by the partly ruptured breaking points 21". As shown in figure 2, some material of the severed breaking points 21" remains at the support structure element 20 and at the component 1.

After severance of the breaking points 21", the first chain link 20 is moved by the force f in the longitudinal direction LE relative to the component 1, here to the right. Once the first chain link 20 is moved away from a predetermined minimum distance, e.g. 0.02 cm, especially with regard to the neighbouring (second) chain link 20, the projection 23 of the first chain link gets into physical contact with an inner wall of a recess 24 of the adjacent support structure element 20 (the second from the right) and transfers the force f, which is effective essentially in the longitudinal direction LE, to the neighboring second support structure element 20. The projection 23 of the first chain link 20 and the recess 24 of the second chain link 20 provide a form-fitting connection, whereby the two adjacent support structure elements 20 are chained via these coupling parts 23, 24 to one another.

By virtue of the force f that is transferred via the form-fitting connection to the second chain link 20, the predetermined breaking points 21 of the second support structure element 20 can be broken (not shown), whereby the force f is working essentially perpendicular to the longitudinal extension LE' of the chain link 20. In this manner, the force f can be transferred stepwise from one chain link 20 to the neighbouring next chain link 20 (here to the left), whereby the complete support structure 2 can be detached from the component 1 and can be removed from the component 1.

In figure 2, the two support structure elements 20 on the very left, on which currently no force f acts, are still in their original position with regard to the component 1, i.e. as they were manufactured in the AM-process. It is shown that in the initial position of the chain links 20 the coupling parts 23, 24 of two adjacent chain links 20 are realized with a certain clearance or play. For example, the projection 23 of the second support structure element 20 from the right is located in such a way in the associated recess 24 of the third chain link 20 from the right that there is a certain distance d, i.e. a clearance or an open space, between an inner surface of the recess 24 and an outer surface of the projection 23. This distance d must be overcome by a relative movement of the (here) second support structure element 20 from the right before the force f is transmitted.

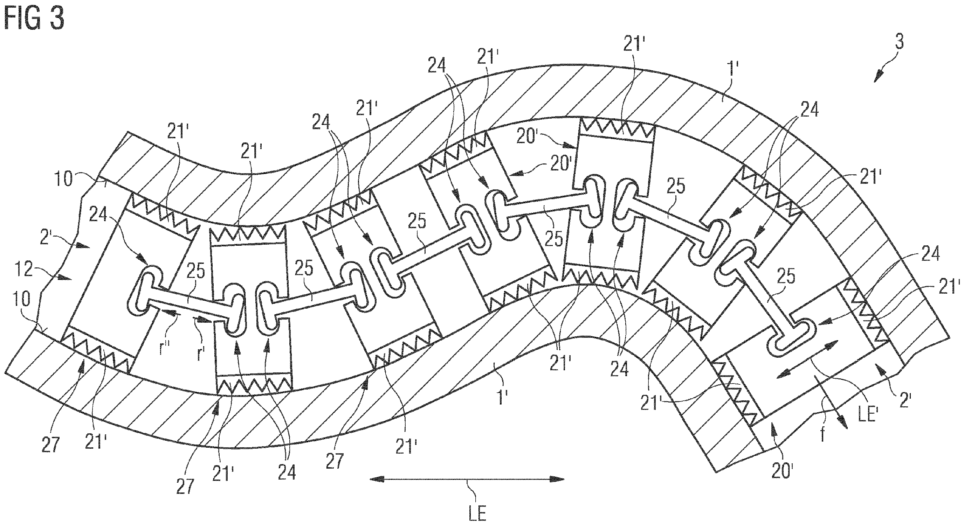

Figure 3 shows a sectional view of a subarea of a manufacturing arrangement 3 with a support structure 2' according to a different embodiment of the invention, whereby the support structure 2' fills in a curved continuous tubular recess 12. The support structure 2' inside the component 1' is curved or serpentine shaped along its longitudinal extension LE. In general, the component 1' as a whole can be curved or serpentine shaped, e.g. the outer shape of the component 1' can essentially correspond to the shape of the tubular recess 12. However, it is also possible that the outer shape of the component 1' is different from the shape of the area in which the support structure 2' is arranged, e.g. different from the shape of the tubular recess 12.

The serpentine shaped support structure 2' comprises a plurality of separate support structure elements 20', which are connected via two breaking points 21' each with the surface 10 of the component 1'. In particular, the respective breaking points 21' mechanically connect a respective solid basic body 22' with the component 1'. Different from figure 2, the support structure elements 20' comprise two recesses 24 each, whereby the recesses 24 are formed on opposite sides (except for the outer chain links 20'). For a form-fitting connection, there are two adjacent chain links 20' coupled to each other via an intermediate member 25, whereby said intermediate member 25 is an elongated connector with two projections in its end regions. The intermediate member 25 is bone-shaped here. The end parts of the intermediate member 25 are realized essentially mushroom-like. It becomes clear that the cross section of the intermediate member 25 increases starting from a central area towards the two end regions according to a direction r' or r" respectively. In a similar manner, the cross sections of the projections 23 in figures 1 and 2 increase towards the associated support structure element 20.

The respective projections of each intermediate member 25 are designed in such a way that each of the projections positively engages in a recess 24 of an associated chain link 20'. As there is a number of such intermediate members 25, wherein each intermediate member 25 engages with two recesses 24 of different support structure elements 20', which recesses 24 face each other, a flexible chain-like structure 27 is provided. Due to the increased flexibility of the chain-like structure 27, especially due to the movability of the (detached) individual chain links 20' and/or the intermediate members 25 against each other, the entire support structure 2' can be pulled out of the curved recess 12 in a common process. The force f, for removal of the support structure 2', is applied in a direction essentially perpendicular to a longitudinal extension LE' of the chain links 20'.

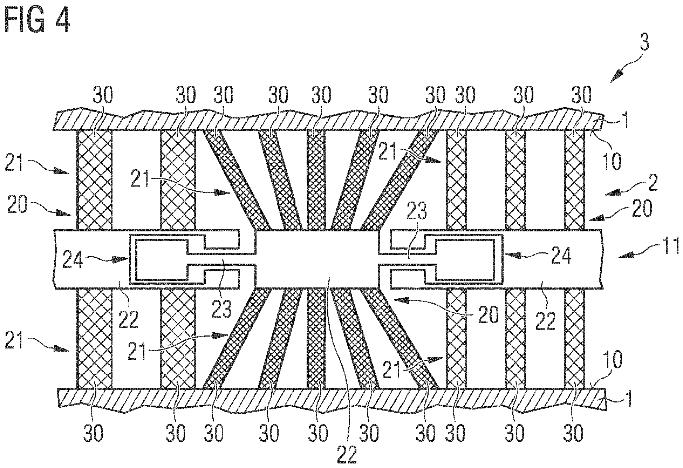

Figure 4 shows a sectional view of a subarea of a manufacturing arrangement 3 comprising a component 1 and a support structure 2 according to an embodiment of the invention. The support structure 2 comprises three support structure elements 20 here, whereby the geometry and the volume of the individual support structure elements 20 is different from one another. On the one hand, the volume of the respective solid basic bodies 22 is different. On the other hand, the breaking points 21 comprise a number of separate breaking elements 30, whereby the orientation and the volume of the breaking elements 30 differs between the respective support structure elements 20.

In Figure 4, it is shown that the volume of the entire support structure 2 is substantially smaller than the volume of the cavity 11 or blind hole 11 in which the support structure 2 is built.

Other than shown here purely schematically, the solid basic bodies 22 and the breaking points 21 can include hollow portions and/or can consist of a specific texture. The texture building a respective solid basic body 22 and that building the areas providing the breaking points 21 can be different from one another. In particular, one texture can be denser than the other. Preferably, the texture building a solid basic body 22 can be denser than the texture building the areas providing the breaking points 21, e.g. the breaking elements 30, and/or than that building the breaking points 21 themselves. In the case hollow portions are included in a solid basic body 22 and/or in the areas providing the breaking points 21, e.g. the breaking elements 30, and/or in the breaking points 21 themselves the percentage of the hollow portions can be different in the different parts of one support structure element 20. A different percentage of hollow portions can be used for changing the density and/or weight from one part to the other within one support structure element 20. As shown schematically here, the breaking elements 30 of the respective support structure elements 20 can have a different density.

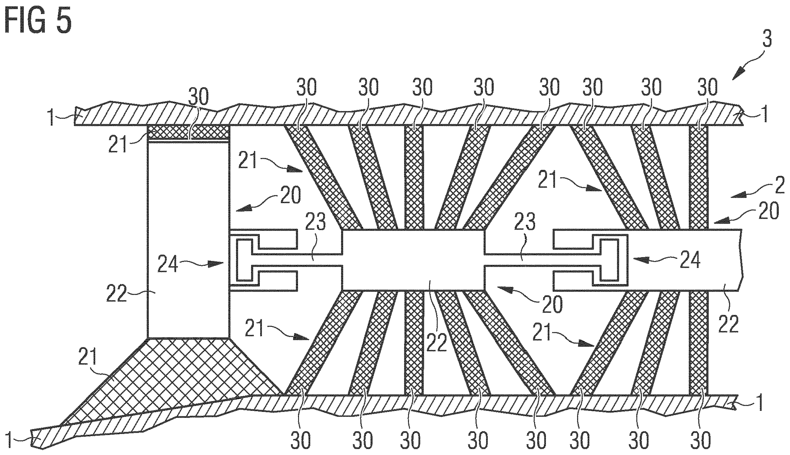

Figure 5 shows a sectional view of a subarea of a manufacturing arrangement 3 comprising a component 1 and a support structure 2 according to an embodiment of the invention. As described with regard to figure 4, the support structure 2 here also comprises three support structure elements 20 with a different design and geometry. The two support structure elements 20 on the right and in the middle here each comprise a comparatively small solid basic body 22 and two breaking points 21 that are realized by means of a number of breaking elements 30. In contrast, the support structure element 20 on the left has a comparatively large solid basic body 22 and two breaking points 21 with a relatively large volume. The two breaking points 21 of the same support structure element 20 on the left have a different design. In addition, the breaking elements 30 or breaking points 21 of the respective support structure elements 20 have a different density here. Such a support structure element 20 with a comparatively large or large-volume solid basic body 22 and/or with a comparatively large-volume breaking point 21 can be provided in areas of the component 1 where particularly high mechanical stabilization is required. As can be seen, the geometry of the support structure elements 20 might change depending on the position of the chain-link 20 within the chain or in relation with the component 1 itself. Additionally, if for example the support structure element 20 with a comparatively large or larger volume solid basic body 22 is the last chain-link of a chain-like support structure 2, its shape and dimensions contribute to remove debris and fragments from the other (comparatively smaller) support structure elements 20.

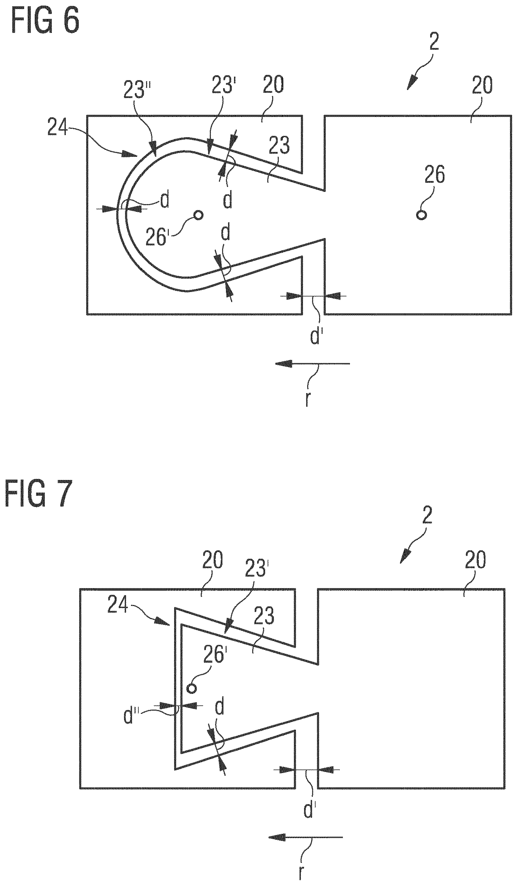

Figure 6 shows a schematic sectional view of a support structure 2 with two adjacent chain links 20 that are coupled to each other via form-fitting connection, whereby the chain links 20 are in an initial state, i.e. without force acting on the chain links 20. In the initial state, there is a distance d' between the two chain links 20, e.g. 0.02 cm.

The first chain link 20 on the right has a projection 23 that positively engages in an associated recess 24 of the adjacent chain link 20 on the left. The projection 23 is realized in such a way that a cross section of the projection 23 increases in a first subsection 23' or region 23' along a direction r connecting the two chain links 20. As is shown in figure 6, the cross section of the projection 23 increases continuously according to direction r towards a center 26' of the second chain link 20. In this special case, the cross section reaches its maximum shortly after the center 26' related to direction r. The direction r is here essentially parallel to an axis (not shown) passing through the center 26 of the first chain link 20 and the center 26' of the second chain link 20.

In a second subsection 23" or region 23", the cross section of the projection 23 continuously decreases along the direction r. In this special case, the projection 23 comprises a cone-like shape with a hemispherical end. The projection 23 is shaped essentially drop-type.

Depending on the design of the support structure 2, the two chain links 20 could comprise further coupling parts on their respective free sides along or opposite to the direction r.

In the initial state shown in figure 6 the coupling parts 23, 24 of the neighbouring chain links 20 are realized with a certain clearance or play, which is indicated by an open space with a diameter d, e.g. 0.02 cm, between an outer surface of the projection 23 and an inner surface of the recess 24.

Figure 7 shows a schematic sectional view of a support structure 2 with two adjacent chain links 20 similar to figure 6, whereby the projection 23 of a first support structure element 20 on the right is shaped cone-like. The recess 24 within the second (left) chain link 20 is designed complementary to the shape of the projection 23, whereby there is a certain clearance between the two parts 23, 24.

Again, the projection 23 is realized such that its cross section increases continuously in a first region 23' along the direction r connecting the two chain links 20. However, in this example, unlike to figure 6 there is no second region, in which the cross section of the projection 23 would decreases along the direction r, as the projection 23 terminates with its maximum cross section. As indicated in figure 7, the open space or the distance d, d" between the surfaces of the coupling parts 23, 24 can be different in various sections of the form-fitting coupling, whereby the distance d' between the chain links 20 itself (apart from the coupling parts 23, 24) can be different again.

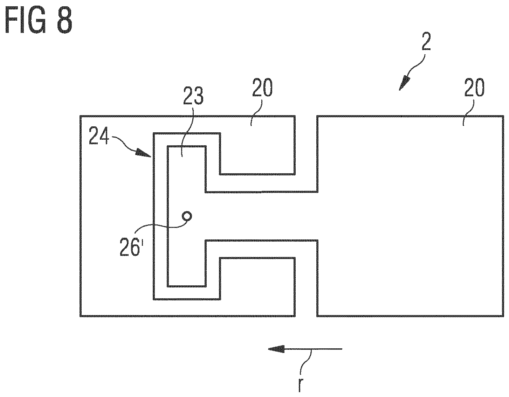

Figure 8 shows a schematic sectional view of a support structure 2 with two adjacent chain links 20, whereby the projection 23 of a first support structure element 20 on the right is shaped T-like. Unlike figure 7, the cross section of the projection 23 increases towards the centre 26' of the second (left) chain link 20 along the direction r in a discontinuous manner.

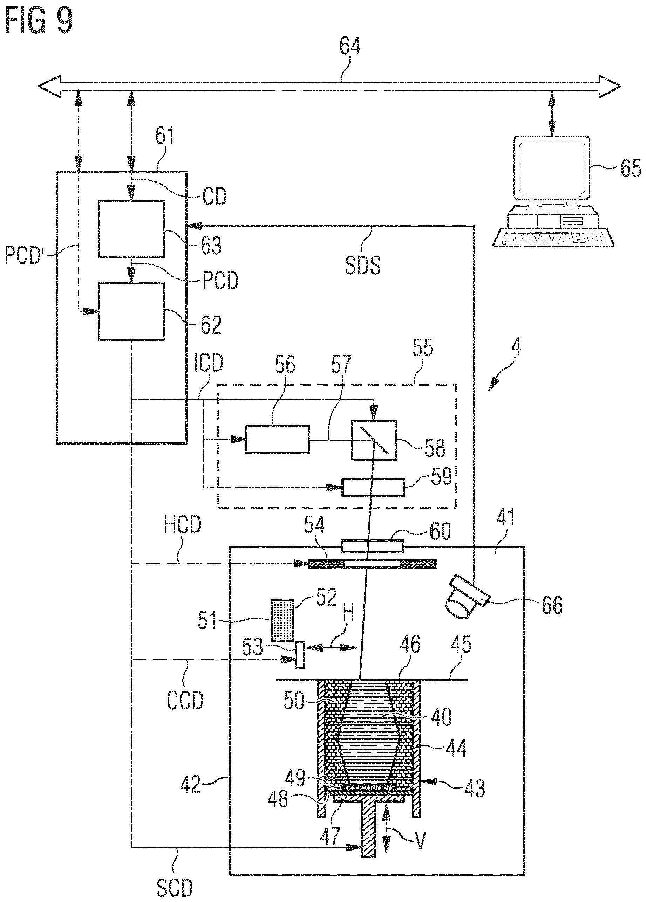

Figure 9 shows an exemplary embodiment of a device 4 for the additive manufacture of manufacturing products 40 in the form of a laser sintering or laser melting apparatus device 4, wherein it is explicitly noted here that the invention is not limited to laser sintering or laser melting devices. In general, the invention can be applied to any other method for the generative or additive production of a three-dimensional object by application, in particular layer by layer, and selective solidification of a build-up material, wherein, for the purpose of solidification, an energy beam is delivered to the build-up material that is to be solidified.

The device 4 for additive manufacturing is also termed AM-device 4 and comprises a process space 41 or a process chamber 41 with a chamber wall 42, in which the manufacturing process is performed substantially. An upwardly open container 43 with a container wall 44 is situated in the process chamber 41. The upper opening of the container 43 forms the current working plane 45. The region of this working plane 45 lying within the opening of the container 43 can be used to build up the object 40 and is therefore referred to as a construction field 46.

The container 43 has a base panel 48 movable in a vertical direction V and arranged on a support 47. This base panel 48 closes the container 43 downwardly and thus forms the bottom of the container 43. The base panel 48 can be formed integrally with the support 47, but can also be a panel formed separately from the support 47 and can be fastened to or easily mounted on the support 47. Depending on the specific build-up material, e.g. the used powder, and depending on the manufacturing process, a construction platform 49 can be mounted on the base panel 48 as a construction substrate, on which the object 40 is built up. In principle, however, the object 40 can also be built up on the base panel 48 itself, which then forms the construction substrate.

The fundamental building of the object 40 is performed by firstly applying a layer of build-up material to the construction platform 49, then selectively solidifying the build-up material by means of a laser at those points which are intended to form parts of the object 40 to be manufactured, then lowering the base panel 48, and thus the construction platform 49, with the aid of the support 47 and applying a new layer of the construction material and then selectively solidifying the same, etc.

In figure 9 the object 40 built up in the container 43 is shown below the working plane 45 in an intermediate state. It already has a plurality of solidified layers, surrounded by remaining, unsolidified build-up material 50. Various materials can be used as build-up material, preferably powder, in particular metal powder, plastic powder, ceramic powder, sand, filled or mixed powder, or also pasty materials. The object 40 in the process chamber 41 can for example be an object 1, 1' with a support structure 2, 2' (not shown here) as it was described with regard to any of figures 1 to 8.

Fresh build-up material 52 is disposed in a storage container 51 of the AM-device 4. The build-up material 52 can be applied in the working plane 45 or within the construction field 46 in the form of a thin layer with the aid of a coater 53 movable in the horizontal direction H.

An additional radiation heater 54 is optionally disposed in the process chamber 41, e.g. an infrared emitter.

For selective solidification, the AM-device 4 comprises a solidification unit 55, here an exposure apparatus 55 with a laser 56. This laser 56 generates a laser beam 57, which is deflected via a deflection apparatus 58 so as to travel over the exposure paths or tracks provided in accordance with the exposure strategy in the layer that is to be solidified selectively and so as to selectively introduce the energy. This laser beam 57 is also focused suitably by a focusing device 59 in the working plane 45. The solidification unit 55 is disposed here outside the process chamber 41 and the laser beam 57 is conducted into the process chamber 41 via an in-coupling window 60 mounted on the upper side of the process chamber 41 in the chamber wall 42.

The solidification unit 55 for example can comprise a plurality of lasers 56. This lasers may preferably be gas or solid-state lasers or any other type of laser. For example, a laser can be formed by laser diodes, in particular a VCSEL (vertical cavity surface emitting laser) or VECSEL (vertical external cavity surface emitting laser) or a row of these lasers.

The AM-device 4 contains a sensor assembly 66, which is suitable for detecting process radiation emitted as the laser beam 57 impinges on the build-up material in the working plane 45. This sensor assembly 66 operates here in a spatially resolved manner, i.e. it is capable of detecting a kind of emission image of the layer in question. An image sensor or a camera which is sufficiently sensitive in the region of the emitted radiation is preferably used as sensor assembly 66. Alternatively or additionally, one or more sensors could also be used in order to detect an optical and/or thermal process radiation, for example photodiodes, which detect the electromagnetic radiation emitted by a melt pool under impinging laser beam 57, or temperature sensors for detecting an emitted thermal radiation.

The signals detected by the sensor assembly 66 are transferred here as process chamber sensor data SDS to a control device 61 of the AM-device 4, which is also used to actuate the various components of the AM-device 4 for overall control of the additive manufacturing process. The process chamber sensor data SDS can be used for a regulation of the manufacturing process by the control device 61.

The control device 61 comprises here an optional control unit 62 and a control data generation device 63. The control device 61 is coupled here for example via a bus 64 or another data connection to a terminal 65 having a display or the like. A user can control the control device 61 and its subcomponents 62, 63 and therefore the entire AM-device 4 via this terminal 65. In particular, the data bus 64 and/or the terminal 65 are suitable to provide construction data CD to the control device 61. Such construction data CD can for example be digital 3D design data of a component and a support structure to be manufactured. Such and other data can be fed into the control device 61. Based on these construction data CD, preferably taking into account further process parameters, the control data generation device 63 can generate control data PCD, also called process control data PCD, for the additive manufacturing of at least one component with at least one support structure. The control data PCD can then be fed into a control unit 62.

In this example, the control data generation device 63 is realized as part of the control device 61 of the AM-device 4. However, the control data generation device 63 could also be realized separately, e.g. on an external computer. Then the ready made (process) control data PCD' could be fed into the control device 61, in particular directly into the control unit 62, which is schematically shown here by a dashed line.

The optional control unit 62 is designed to control the additive manufacturing process by the AM-device 4 based on the provided (process) control data PCD, PCD'. For example, the control unit 62 can split the control commands that are encoded in the control data PCD, PCD' into different packages of control commands and thereby selectively actuate the components of the irradiation apparatus 55, e.g. the laser 56, the deflection apparatus 58 and the focussing apparatus 59 via irradiation control data ICD. Likewise, the control unit 62 can control the radiation heater 54 via heating control data HCD and the coater 53 via coating control data CCD as well as the support 47 via support control data SCD. These data (ICD, HCD, CCD, SCD) and further control data for controlling the additive manufacturing process of the AM-device 4 are preferably encoded in and/or can be generated on the basis of the provided control data PCD, PCD'. Alternatively or in addition, the control unit 62 could transfer the provided control data PCD, PCD' into a special data structure or data matrix to control the components of the AM-device 4.

Finally, it is pointed out once again that the methods and devices described in detail above are merely exemplary embodiments, which can be modified in the most varied of ways by the person skilled in the art without departing from the scope of the invention. For example, the terms "first" and "second" support structure element are primarily used to differentiate the individual support structure elements and do not necessarily refer to a specific order within a support structure. Furthermore, the use of the indefinite article "a" or "an" does not exclude the possibility that the relevant features can also be present more than once. Likewise, the term "unit" does not exclude that it consists of several interacting sub-components, which may also be spatially distributed.

### Reference Signs

1, 1' component / object
2,2' support structure
3 manufacturing arrangement
4 additive manufacturing device
10 surface
11 blind hole
12 tubular recess
20, 20' support structure element
21, 21', 21" breaking point
22, 22' solid basic body
23 projection
23', 23" subsection
24 recess
25 intermediate member
26, 26' center
27 chain-like structure
28 filigree structure
29 access point
30 breaking element
40 manufacturing product / object
41 process chamber / process space
42 chamber wall
43 container
44 container wall
45 working plane
46 construction field
47 support
48 base panel
49 construction platform
50 build-up material
51 storage container
52 build-up material
53 coater
54 radiation heater
55 solidification unit / exposure apparatus
56 laser
57 laser beam
58 deflection apparatus
59 focussing device
60 in-coupling window
61 control device
62 control unit
63 control data generation device
64 bus
65 terminal
66 sensor assembly / camera
d, d', d" distance
f force
r, r', r" direction
H horizontal direction
V vertical direction
CD construction data
LE, LE' longitudinal extension
CCD coating control data
HCD heating control data
ICD irradiation control data
PCD, PCD' process control data
SCD support control data
SDS process chamber sensor data

## Claims

1. Computer-implemented method for generating control data (PCD, PCD') for a device (4) for additive manufacturing of a component (1, 1') by selectively solidifying an assembly material (52) in an additive manufacturing process, wherein the control data (PCD, PCD') are generated in such a way that they comprise instructions for the device (4) for additive manufacturing, such that:
- the component (1, 1') is built up with at least one support structure (2, 2') mechanically connected to the component (1, 1 '),
- wherein the support structure (2, 2') comprises at least two support structure elements (20, 20') arranged side by side in a direction along a surface (10) of the component (1, 1 '),
- wherein at least one of the support structure elements (20, 20') mechanically connects the surface (10) of the component (1, 1') and the support structure (2, 2'), wherein at least one of the support structure elements (20, 20') comprises at least one predetermined breaking point (21, 21') and
- wherein the at least two support structure elements (20, 20') form together a chain-like structure (27), which can be removed from the component (1, 1') by applying a force (f) at an access point (29) of the support structure (2, 2').

2. Method according to claim 1, wherein at least two adjacent support structure elements (20, 20') are chained to one another via a form-fitting connection (23, 24, 25), which is designed in such a way that when a first of the support structure elements (20, 20') is moved away from a second of the support structure elements (20, 20'), a force (f) is transmitted from the first support structure element (20, 20') to the second support structure element (20, 20').

3. Method according to claim 2, wherein the force (f) is transmitted from the first support structure element (20, 20') to the second support structure element (20, 20'), when the first support structure element (20, 20') is moved away from a predetermined minimum distance (d'), which preferentially amounts to at least 0.02 cm.

4. Method according to any of the preceding claims 1 to 3, wherein a first support structure element (20) of at least two support structure elements (20) coupled to one another comprises a recess (24) and a second support structure element (20) comprises an associated projection (23), which positively engages in the recess (24).

5. Method according to any of the preceding claims 1 to 4, wherein at least two adjacent support structure elements (20') each comprise at least one recess (24) facing to each other and are coupled to each other by an intermediate member (25), which engages positively in the facing recesses (24) of the adjacent support structure elements (20').

6. Method according to any of the preceding claims 4 or 5,
- wherein the projection (23) of a first support structure element (20) is designed such that its cross-section along a direction (r) connecting the first support structure element (20) and a second support structure element (20) at least partially increases towards a centre (26') of the second support structure element (20),
and/or
- wherein the intermediate member (25) is designed such that its cross-section along a direction (r', r") connecting the intermediate member (25) and at least one of a first support structure element (20') and a second support structure element (20') at least partially increases towards a centre (26, 26') of the first support structure element (20') and/or the second support structure element (20'),
and/or
- wherein a recess (24) is designed such that it receives a projection (23) or at least a part of an intermediate member (25) in a form-fitting manner.

7. Method according to any of the preceding claims, wherein the support structure (2, 2') fills in one of the following structures in the component (1, 1'):
- a blind hole (11),
- a straight and/or curved continuous tubular recess (12).

8. Method for additive manufacturing of a component (1, 1') by selectively solidifying an assembly material (52) in an additive manufacturing process,
- wherein the component (1, 1') is built up with at least one support structure (2, 2') mechanically connected to the component (1, 1 '),
- wherein the support structure (2, 2') comprises at least two support structure elements (20, 20') arranged side by side in a direction along a surface (10) of the component (1, 1 '),
- wherein at least one of the support structure elements (20, 20') mechanically connects the surface of the component (1, 1') and the support structure (2, 2'), wherein at least one of the support structure elements (20, 20') comprises at least one predetermined breaking point (21, 21') and
- wherein the at least two support structure elements (20, 20') form together a chain-like structure (27), which can be removed from the component (1, 1') by applying a force (f) at an access point (29) of the support structure (2, 2'), and wherein the method is preferably controlled by a control data (PCD, PCD') set generated using the method according to any of the preceding claims 1 to 7.

9. Control data generation device (63) for generating control data (PCD, PCD') for a device (4) for additive manufacturing of a component (1, 1') by selectively solidifying an assembly material (52) in an additive manufacturing process, wherein the control data generation device (63) is designed such that the generated control data (PCD, PCD') comprise instructions for the device (4) for additive manufacturing such that:
- the component (1, 1') is built up with at least one support structure (2, 2') mechanically connected to the component (1, 1'),
- wherein the support structure (2, 2') comprises at least two support structure elements (20, 20') arranged side by side in a direction along a surface (10) of the component (1, 1'),
- wherein at least one of the support structure elements (20, 20') mechanically connects the surface (10) of the component (1, 1') and the support structure (2, 2'), wherein at least one of the support structure elements (20, 20') comprises at least one predetermined breaking point (21, 21') and
- wherein the at least two support structure elements (20, 20') form together a chain-like structure (27), which can be removed from the component (1, 1') by applying a force (f) at an access point (29) of the support structure (2, 2').

10. Control device (61) for a device (4) for additive manufacturing of a component (1, 1') by selectively solidifying an assembly material (52) in an additive manufacturing process, wherein the control device (61) is designed to control the device (4) for additive manufacturing in such a way that:
- the component (1, 1') is built up with at least one support structure (2, 2') mechanically connected to the component (1, 1'),
- wherein the support structure (2, 2') comprises at least two support structure elements (20, 20') arranged side by side in a direction along a surface (10) of the component (1, 1'),
- wherein at least one of the support structure elements (20, 20') mechanically connects the surface (10) of the component (1, 1') and the support structure (2, 2'), wherein at least one of the support structure elements (20, 20') comprises at least one predetermined breaking point (21, 21') and
- wherein the at least two support structure elements (20, 20') form together a chain-like structure (27), which can be removed from the component (1, 1') by applying a force (f) at an access point (29) of the support structure (2, 2').

11. Device (4) for additive manufacturing of a component (1, 1') in a manufacturing process comprising at least one feed device (53) for introducing a layer of an assembly material (52) into a process space (41), a solidification unit (55) for selectively solidifying at least a portion of the assembly material (52) of the layer and a control device (61) according to claim 10.

12. Computer program product comprising a computer program, which can be loaded directly into a memory device of a control data generation device (63) and/or a control device (61) of a device (4) for additive manufacturing of a component (1, 1'), comprising program sections to carry out all steps of the method according to any of the preceding claims 1 to 8, when the computer program is executed in the control data generation device (63) and/or in the control device (61).

## Patentansprüche

1. Computerimplementiertes Verfahren zum Erzeugen von Steuerdaten (PCD, PCD') für eine Vorrichtung (4) zur additiven Fertigung eines Bauteils (1, 1') durch selektives Verfestigen eines Aufbaumaterials (52) in einem additiven Fertigungsprozess, wobei die Steuerdaten (PCD, PCD') derart erzeugt werden, dass sie Befehle für die Vorrichtung (4) zur additiven Fertigung umfassen, so dass:
- das Bauteil (1, 1') mit mindestens einer mit dem Bauteil (1, 1') mechanisch verbundenen Stützstruktur (2, 2') aufgebaut wird,
- wobei die Stützstruktur (2, 2') mindestens zwei Stützstrukturelemente (20, 20') umfasst, die nebeneinander in einer Richtung entlang einer Oberfläche (10) des Bauteils (1, 1') angeordnet sind,
- wobei mindestens eines der Stützstrukturelemente (20, 20') die Oberfläche (10) des Bauteils (1, 1') und die Stützstruktur (2, 2') mechanisch verbindet, wobei mindestens eines der Stützstrukturelemente (20, 20') mindestens eine Sollbruchstelle (21, 21') aufweist und
- wobei die mindestens zwei Stützstrukturelemente (20, 20') zusammen eine kettenartige Struktur (27) bilden, die durch Anwenden einer Kraft (f) an einem Zugangspunkt (29) der Stützstruktur (2, 2') von dem Bauteil (1, 1') entfernt werden kann.

2. Verfahren nach Anspruch 1, wobei mindestens zwei benachbarte Stützstrukturelemente (20, 20') über eine formschlüssige Verbindung (23, 24, 25) miteinander verkettet sind, die so ausgebildet ist, dass bei einer Bewegung eines ersten der Stützstrukturelemente (20, 20') weg von einem zweiten der Stützstrukturelemente (20, 20') eine Kraft (f) von dem ersten Stützstrukturelement (20, 20') auf das zweite Stützstrukturelement (20, 20') übertragen wird.

3. Verfahren nach Anspruch 2, wobei die Kraft (f) von dem ersten Stützstrukturelement (20, 20') auf das zweite Stützstrukturelement (20, 20') übertragen wird, wenn das erste Stützstrukturelement (20, 20') von einer vorbestimmten Mindestdistanz (d'), die vorzugsweise mindestens 0,02 cm beträgt, wegbewegt wird.

4. Verfahren nach einem der vorhergehenden Ansprüche 1 bis 3, wobei ein erstes Stützstrukturelement (20) von mindestens zwei miteinander gekoppelten Stützstrukturelementen (20) eine Ausnehmung (24) und ein zweites Stützstrukturelement (20) einen zugehörigen Vorsprung (23) aufweist, der formschlüssig in die Ausnehmung (24) eingreift.

5. Verfahren nach einem der vorhergehenden Ansprüche 1 bis 4, wobei mindestens zwei benachbarte Stützstrukturelemente (20') jeweils mindestens eine einander zugewandte Ausnehmung (24) aufweisen und durch ein Zwischenglied (25), das formschlüssig in die einander zugewandten Ausnehmungen (24) der benachbarten Stützstrukturelemente (20') eingreift, miteinander gekoppelt sind.

6. Verfahren nach einem der vorhergehenden Ansprüche 4 oder 5,
- wobei der Vorsprung (23) eines ersten Stützstrukturelements (20) so ausgebildet ist, dass sein Querschnitt entlang einer das erste Stützstrukturelement (20) und ein zweites Stützstrukturelement (20) verbindenden Richtung (r) zumindest teilweise zu einem Zentrum (26') des zweiten Stützstrukturelements (20) hin zunimmt, und/oder
- wobei das Zwischenelement (25) so ausgebildet ist, dass sein Querschnitt entlang einer das Zwischenelement (25) und mindestens einem von einem ersten Stützstrukturelement (20') und einem zweiten Stützstrukturelement (20') verbindenden Richtung (r', r") zumindest teilweise zu einem Zentrum (26, 26') des ersten Stützstrukturelements (20') und/oder des zweiten Stützstrukturelements (20') hin zunimmt,
und/oder
- wobei eine Ausnehmung (24) so ausgebildet ist, dass sie einen Vorsprung (23) oder zumindest einen Teil eines Zwischengliedes (25) formschlüssig aufnimmt.

7. Verfahren nach einem der vorhergehenden Ansprüche, wobei die Stützstruktur (2, 2') eine der folgenden Strukturen im Bauteil (1, 1') ausfüllt:
- ein Sackloch (11),
- eine gerade und/oder gebogene durchgehende rohrförmige Aussparung (12).

8. Verfahren zur additiven Fertigung eines Bauteils (1, 1') durch selektives Verfestigen eines Aufbaumaterials (52) in einem additiven Fertigungsprozess,
- wobei das Bauteil (1, 1') mit mindestens einer mit dem Bauteil (1, 1') mechanisch verbundenen Stützstruktur (2, 2') aufgebaut wird,
- wobei die Stützstruktur (2, 2') mindestens zwei Stützstrukturelemente (20, 20') umfasst, die nebeneinander in einer Richtung entlang einer Oberfläche (10) des Bauteils (1, 1') angeordnet sind,
- wobei mindestens eines der Stützstrukturelemente (20, 20') die Oberfläche des Bauteils (1, 1') und die Stützstruktur (2, 2') mechanisch verbindet, wobei mindestens eines der Stützstrukturelemente (20, 20') mindestens eine Sollbruchstelle (21, 21') aufweist und
- wobei die mindestens zwei Stützstrukturelemente (20, 20') zusammen eine kettenartige Struktur (27) bilden, die durch Anwenden einer Kraft (f) an einem Zugangspunkt (29) der Stützstruktur (2, 2') von dem Bauteil (1, 1') entfernt werden kann, und wobei das Verfahren vorzugsweise durch einen mit dem Verfahren nach einem der vorhergehenden Ansprüche 1 bis 7 erzeugten Satz von Steuerdaten (PCD, PCD') gesteuert wird.

9. Steuerdaten-Erzeugungseinrichtung (63) zum Erzeugen von Steuerdaten (PCD, PCD') für eine Vorrichtung (4) zur additiven Fertigung eines Bauteils (1, 1') durch selektives Verfestigen eines Aufbaumaterials (52) in einem additiven Fertigungsprozess, wobei die Steuerdaten-Erzeugungseinrichtung (63) so ausgebildet ist, dass die erzeugten Steuerdaten (PCD, PCD') Befehle für die Vorrichtung (4) zur additiven Fertigung umfassen, so dass:
- das Bauteil (1, 1') mit mindestens einer mit dem Bauteil (1, 1') mechanisch verbundenen Stützstruktur (2, 2') aufgebaut wird,
- wobei die Stützstruktur (2, 2') mindestens zwei Stützstrukturelemente (20, 20') umfasst, die nebeneinander in einer Richtung entlang einer Oberfläche (10) des Bauteils (1, 1') angeordnet sind,
- wobei mindestens eines der Stützstrukturelemente (20, 20') die Oberfläche (10) des Bauteils (1, 1') und die Stützstruktur (2, 2') mechanisch verbindet, wobei mindestens eines der Stützstrukturelemente (20, 20') mindestens eine Sollbruchstelle (21, 21') aufweist und
- wobei die mindestens zwei Stützstrukturelemente (20, 20') zusammen eine kettenartige Struktur (27) bilden, die durch Anwenden einer Kraft (f) an einem Zugangspunkt (29) der Stützstruktur (2, 2') von dem Bauteil (1, 1') entfernt werden kann.

10. Steuereinrichtung (61) für eine Vorrichtung (4) zur additiven Herstellung eines Bauteils (1, 1') durch selektives Verfestigen eines Aufbaumaterials (52) in einem additiven Fertigungsprozess, wobei die Steuereinrichtung (61) dazu ausgebildet ist, die Vorrichtung (4) zur additiven Fertigung derart zu steuern, dass:
- das Bauteil (1, 1') mit mindestens einer mit dem Bauteil (1, 1') mechanisch verbundenen Stützstruktur (2, 2') aufgebaut wird,
- wobei die Stützstruktur (2, 2') mindestens zwei Stützstrukturelemente (20, 20') umfasst, die nebeneinander in einer Richtung entlang einer Oberfläche (10) des Bauteils (1, 1') angeordnet sind,
- wobei mindestens eines der Stützstrukturelemente (20, 20') die Oberfläche (10) des Bauteils (1, 1') und die Stützstruktur (2, 2') mechanisch verbindet, wobei mindestens eines der Stützstrukturelemente (20, 20') mindestens eine Sollbruchstelle (21, 21') aufweist und
- wobei die mindestens zwei Stützstrukturelemente (20, 20') zusammen eine kettenartige Struktur (27) bilden, die durch Anwenden einer Kraft (f) an einem Zugangspunkt (29) der Stützstruktur (2, 2') von dem Bauteil (1, 1') entfernt werden kann.

11. Vorrichtung (4) zur additiven Fertigung eines Bauteils (1, 1') in einem Fertigungsverfahren, umfassend mindestens eine Zuführeinrichtung (53) zum Einbringen einer Schicht eines Aufbaumaterials (52) in einen Prozessraum (41), eine Verfestigungseinheit (55) zum selektiven Verfestigen mindestens eines Teils des Aufbaumaterials (52) der Schicht und eine Steuereinrichtung (61) nach Anspruch 10.

12. Computerprogrammprodukt, umfassend ein Computerprogramm, das direkt in eine Speichereinrichtung einer Steuerdaten-Erzeugungseinrichtung (63) und/oder einer Steuereinrichtung (61) einer Vorrichtung (4) zur additiven Fertigung eines Bauteils (1, 1') ladbar ist, umfassend Programmabschnitte zur Durchführung aller Schritte des Verfahrens nach einem der vorhergehenden Ansprüche 1 bis 8, wenn das Computerprogramm in der Steuerdaten-Erzeugungseinrichtung (63) und/oder in der Steuereinrichtung (61) ausgeführt wird.

## Revendications

1. Procédé mis en oeuvre par ordinateur pour générer des données de commande (PCD, PCD') pour un dispositif (4) de fabrication additive d'un composant (1, 1') par solidification sélective d'un matériau d'assemblage (52) dans un processus de fabrication additive, dans lequel les données de commande (PCD, PCD') sont générées de telle sorte qu'elles comprennent des instructions pour le dispositif (4) de fabrication additive, de telle sorte que :
- le composant (1, 1') est constitué d'au moins une structure de support (2, 2') reliée mécaniquement au composant (1, 1'),
- dans lequel la structure de support (2, 2') comprend au moins deux éléments de structure de support (20, 20') disposés côte à côte le long d'une surface (10) du composant (1, 1'),
- dans lequel au moins l'un des éléments de la structure de support (20, 20') relie mécaniquement la surface (10) du composant (1, 1') et la structure de support (2, 2'), dans lequel au moins l'un des éléments de la structure de support (20, 20') comprend au moins un point de rupture prédéterminé (21, 21') et
- dans lequel les au moins deux éléments de la structure de support (20, 20') forment ensemble une structure en forme de chaîne (27), laquelle peut être retirée du composant (1, 1') en appliquant une force (f) à un point d'accès (29) de la structure de support (2, 2').

2. Procédé selon la revendication 1, dans lequel au moins deux éléments de structure de support adjacents (20, 20') sont enchaînés l'un à l'autre par l'intermédiaire d'un raccord à complémentarité de forme (23, 24, 25), lequel est conçu de telle sorte que lorsqu'un premier parmi les éléments de structure de support (20, 20') est éloigné d'un second parmi les éléments de structure de support (20, 20'), une force (f) est transmise du premier élément de structure de support (20, 20') au second élément de structure de support (20, 20').

3. Procédé selon la revendication 2, dans lequel la force (f) est transmise du premier élément de structure de support (20, 20') au second élément de structure de support (20, 20'), lorsque le premier élément de structure de support (20, 20') est éloigné selon une distance minimale prédéterminée (d'), laquelle s'élève de préférence à au moins 0,02 cm.

4. Procédé selon l'une quelconque des revendications précédentes 1 à 3, dans lequel un premier élément de structure de support (20) parmi au moins deux éléments de structure de support (20) accouplés l'un à l'autre comprend un renfoncement (24) et un deuxième élément de structure de support (20) comprend une saillie associée (23), laquelle s'engage positivement dans le renfoncement (24).

5. Procédé selon l'une quelconque des revendications précédentes 1 à 4, dans lequel au moins deux éléments de structure de support adjacents (20') comprennent chacun au moins un renfoncement (24) tournés l'un vers l'autre et accouplés l'un à l'autre par un élément intermédiaire (25), lequel s'engage positivement dans les renfoncements (24) opposés des éléments de structure de support adjacents (20').

6. Procédé selon l'une quelconque des revendications précédentes 4 ou 5,
- dans lequel la saillie (23) d'un premier élément de structure de support (20) est conçue de telle sorte que sa section transversale le long d'une direction (r) reliant le premier élément de structure de support (20) et un deuxième élément de structure de support (20) augmente au moins partiellement vers un centre (26') du deuxième élément de structure de support (20),
et/ou
- dans lequel l'élément intermédiaire (25) est conçu de telle sorte que sa section transversale le long d'une direction (r', r") reliant l'élément intermédiaire (25) et au moins l'un parmi un premier élément de structure de support (20') et un second élément de structure de support (20') augmente au moins partiellement vers un centre (26, 26') du premier élément de structure de support (20') et/ou du second élément de structure de support (20'),
et/ou
- dans lequel un renfoncement (24) est conçu de manière à recevoir une saillie (23) ou au moins une partie d'un élément intermédiaire (25) par complémentarité de forme.

7. Procédé selon l'une quelconque des revendications précédentes, dans lequel la structure de support (2, 2') remplit l'une des structures suivantes dans le composant (1, 1') :
- un trou borgne (11),
- un renfoncement tubulaire continu droit et/ou courbe (12).

8. Procédé de fabrication additive d'un composant (1, 1') par solidification sélective d'un matériau d'assemblage (52) dans un processus de fabrication additive,
- dans lequel le composant (1, 1') est constitué d'au moins une structure de support (2, 2') reliée mécaniquement au composant (1, 1'),
- dans lequel la structure de support (2, 2') comprend au moins deux éléments de structure de support (20, 20') disposés côte à côte le long d'une surface (10) du composant (1, 1'),
- dans lequel au moins l'un des éléments de la structure de support (20, 20') relie mécaniquement la surface du composant (1, 1') et la structure de support (2, 2'), dans lequel au moins l'un des éléments de la structure de support (20, 20') comprend au moins un point de rupture prédéterminé (21, 21') et
- dans lequel les au moins deux éléments de structure de support (20, 20') forment ensemble une structure en forme de chaîne (27), laquelle peut être retirée du composant (1, 1') en appliquant une force (f) à un point d'accès (29) de la structure de support (2, 2'), et dans lequel le procédé est de préférence commandé par un ensemble de données de contrôle (PCD, PCD') généré à l'aide du procédé selon l'une quelconque des revendications précédentes 1 à 7.

9. Dispositif de génération de données de commande (63) destiné à générer des données de commande (PCD, PCD') pour un dispositif (4) de fabrication additive d'un composant (1, 1') par solidification sélective d'un matériau d'assemblage (52) dans un processus de fabrication additive, dans lequel le dispositif de génération de données de commande (63) est conçu de telle sorte que les données de commande générées (PCD, PCD') comprennent des instructions pour le dispositif (4) de fabrication additive, telles que :
- le composant (1, 1') est constitué d'au moins une structure de support (2, 2') reliée mécaniquement au composant (1, 1'),
- dans lequel la structure de support (2, 2') comprend au moins deux éléments de structure de support (20, 20') disposés côte à côte le long d'une surface (10) du composant (1, 1'),
- dans lequel au moins l'un des éléments de la structure de support (20, 20') relie mécaniquement la surface (10) du composant (1, 1') et la structure de support (2, 2'), dans lequel au moins l'un des éléments de la structure de support (20, 20') comprend au moins un point de rupture prédéterminé (21, 21') et
- dans lequel les au moins deux éléments de la structure de support (20, 20') forment ensemble une structure en forme de chaîne (27), laquelle peut être retirée du composant (1, 1') en appliquant une force (f) à un point d'accès (29) de la structure de support (2, 2').

10. Dispositif de commande (61) pour un dispositif (4) de fabrication additive d'un composant (1, 1') par solidification sélective d'un matériau d'assemblage (52) dans un processus de fabrication additive, dans lequel le dispositif de commande (61) est conçu pour commander le dispositif (4) de fabrication additive de telle sorte que :
- le composant (1, 1') est constitué d'au moins une structure de support (2, 2') reliée mécaniquement au composant (1, 1'),
- dans lequel la structure de support (2, 2') comprend au moins deux éléments de structure de support (20, 20') disposés côte à côte le long d'une surface (10) du composant (1, 1'),
- dans lequel au moins l'un des éléments de la structure de support (20, 20') relie mécaniquement la surface (10) du composant (1, 1') et la structure de support (2, 2'), dans lequel au moins l'un des éléments de la structure de support (20, 20') comprend au moins un point de rupture prédéterminé (21, 21') et
- dans lequel les au moins deux éléments de la structure de support (20, 20') forment ensemble une structure en forme de chaîne (27), laquelle peut être retirée du composant (1, 1') en appliquant une force (f) à un point d'accès (29) de la structure de support (2, 2').

11. Dispositif (4) pour la fabrication additive d'un composant (1, 1') dans un procédé de fabrication comprenant au moins un dispositif d'alimentation (53) pour l'introduction d'une couche d'un matériau d'assemblage (52) dans un espace de traitement (41), une unité de solidification (55) pour la solidification sélective d'au moins une partie du matériau d'assemblage (52) de la couche et un dispositif de contrôle (61) selon la revendication 10.

12. Produit de programme informatique comprenant un programme informatique, lequel peut être chargé directement dans un dispositif de mémoire d'un dispositif de génération de données de commande (63) et/ou d'un dispositif de commande (61) d'un dispositif (4) pour la fabrication additive d'un composant (1, 1'), comprenant des sections de programme destinées à mettre en oeuvre toutes les étapes de la méthode selon l'une quelconque des revendications précédentes 1 à 8, lorsque le programme informatique est exécuté dans le dispositif de génération de données de commande (63) et/ou dans le dispositif de commande (61).
